# EUROPEAN PATENT APPLICATION

(11) **EP 4 116 469 A1**
(43) Date of publication of application: **11.01.2023**
(21) Application number: 21183794.3
(22) Date of filing: 05.07.2021
(51) Int. Cl.: D01D 4/02, C08B 16/00, D01D 5/06, D01F 2/00, D01F 2/02, D01F 2/08, D01F 13/02, D01D 4/00

(54) **METHOD OF SPINNING ALKALI CELLULOSE**

(71) Applicant: TreeToTextile AB, 101 23 Stockholm (SE)
(72) Inventor: Hedlund, Artur, 411 27 GÖTEBORG (SE); Hagström, Bengt, 413 18 GÖTEBORG (SE)
(74) Representative: AWA Sweden AB

(57) **Abstract**

A process for spinning an alkaline cellulose spin dope, comprising dissolved cellulose, into an aqueous alkaline coagulation bath liquid, comprising a coagulation salt, whereby forming cellulose filaments. The process comprising the steps of:
- feeding the alkaline cellulose spin dope to a spinneret die (110) with a plurality of holes (120) arranged in at least one group (130) such that the distance (Dl) from the center of any given hole (120) in the group (130) to the closest point on the perimeter (131) of the group (130) does not exceed 3 mm, such as 2 mm, the diameter of each hole (120) being 40 to 100 µm;
- extruding the alkaline cellulose spin dope through the holes (120) into the aqueous alkaline coagulation bath liquid, whereby forming cellulose filaments; and
- withdrawing the cellulose filaments from the aqueous alkaline coagulation bath liquid;
wherein holes (121) at the perimeter (131) of the group (130) is in direct contact with aqueous alkaline coagulation bath liquid.

## Description

### Field of the invention

The present invention relates to a process for spinning cellulose dissolved in aqueous sodium hydroxide (NaOH) into cellulose fibers. In spinning the dissolved alkali cellulose, the alkali cellulose is extruded into a coagulation bath to precipitate cellulose, whereby forming cellulose fibers.

### Background

Fibers have large application areas in the textile industries. Historically, textile fibers have been natural fibers. For example, cotton fibers have for long been used in textile industry for making fabric. In addition, other plant fibers, e.g. flax fibers, have been used. During the 20^{th} century, plastic fibers, e.g. nylon and polyester fibers, emerged as cheap alternative for producing fabric. Still, cotton fibers represent a very important fiber within the textile industries.

Given the desire to reduce the carbon footprint, the need for natural fibers is growing once more. However, also growing and processing of cotton causes environmental problems. Thus, the interest in alternative sources of cellulose to make fibers is growing.

The viscose process, known for long, uses wood as raw material for producing cellulose fibers. In the viscose process, regenerated cellulose fibers are provided by regeneration of sodium cellulose xanthate, i.e. cellulose derivatized by CS₂ (carbon disulphide) to increase the solubility. The use of carbon disulphide is however associated with problems including its toxicity. Further, Na₂SO₄, having no commercial values nowadays, is inevitably formed as a by-product in the viscose process as dissolved sodium cellulose xanthate is spun into aqueous sulfuric acid to precipitate cellulose fibers and to re-generate carbon disulphide. Thus, there is a desire within the art to find alternative processes for providing cellulose fibers from wood.

It is known in the art that non-derivatized cellulose to some extent is soluble in cold aqueous sodium hydroxide. Thus, aqueous sodium hydroxide has been used as cellulose solvent in experimental procedures, though no industrial process for fiber spinning, being economically feasible, is available so far.

In spinning experimental spin dopes comprising cellulose dissolved in aqueous sodium hydroxide, the spin dope has been wet-spun into a coagulation bath comprising aqueous sulfuric acid, as in the viscose process. While providing fibers, such a procedure suffers from requiring vast amounts of sodium hydroxide and produces, similar to the viscose process, sodium sulfate as a residue.

In order to address this problem, it has been suggested in the art (see for example WO 2020/171767, WO 2018/169479, WO 2017/178532, WO 2015/000820, WO 2010/104458 to the present applicant) to spin dissolved cellulose into an alkaline spinbath comprising an aqueous coagulation sodium salt solution, e.g. Na₂CO₃ or Na₂SO₄, and separately recovering sodium hydroxide (NaOH) and a sodium coagulation salt, respectively, from the spin bath. As the chemicals, i.e. NaOH and the coagulation sodium salt, may be recovered separately, the process is deemed promising.

The present applicant has indeed found that that cellulose dissolved in an aqueous sodium hydroxide solution to produce a spin dope, may be spun into a coagulation bath comprising an aqueous coagulation sodium salt solution, e.g. Na₂CO₃ or Na₂SO₄. A wet, swollen tow is provided when the spin dope is spun into the coagulation bath. The tow of regenerated fibers may subsequently be withdrawn from the coagulation bath to provide cellulose fibers.

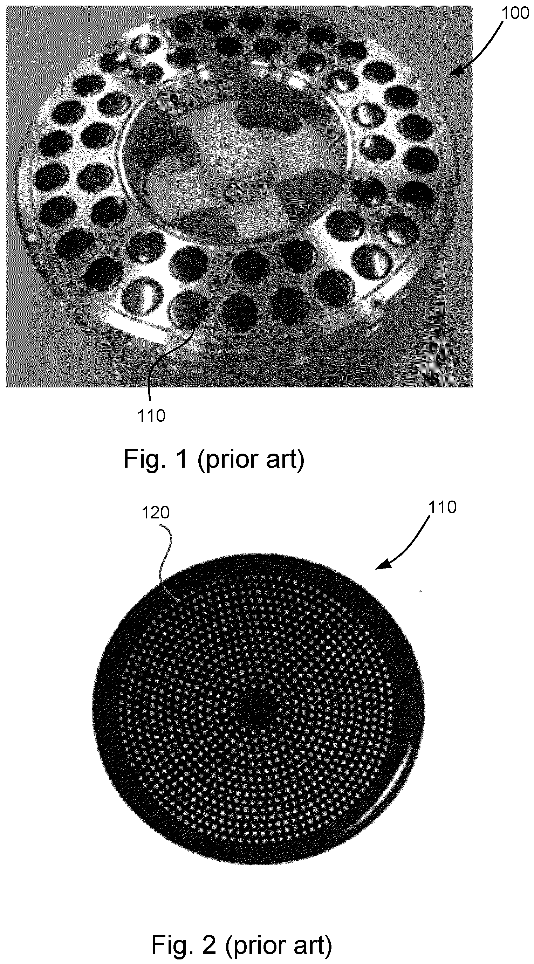

In the viscose process, the sodium cellulose xanthate is typically spun by means of a spinneret die - a small metal plate, thimble, or cap with fine holes through which the spin dope is forced in the spinning of filaments - into an acidic coagulation bath. The spinning head (cf. **Fig. 1** showing a conventional spinning head with a number of spinneret dies, shown in **Fig. 2****,** each with hundreds or thousands of fine holes) is designed to form thousands of thin spin dope jets exiting the spinning head and entering the coagulation bath liquid. Upon contact with the coagulation liquid there will be a diffusion-based exchange of chemicals between the spin dope jets and the coagulation liquid. The inter-diffusion of chemicals is a quick process since the spin dope jets exiting the spinneret capillaries are thin (typically 40 to 100 µm in diameter). Upon contact between the spin dope jets and the coagulation liquid, protons will quickly enter the jets neutralizing the alkali forming sodium sulfate. The solvation power of alkali is thus abruptly decreased, and cellulose is precipitated, forming a dense network of cellulose. Due to the very rapid precipitation (coagulation) of cellulose under the acidic conditions, the spin dope jets are transformed into thin, strong and non-swollen filaments directly upon exiting the spinneret holes. Without being bound to any theory, the rapid precipitation may at least partly be explained by the acidic conditions and the rapid diffusion of hydronium ions (H₃O⁺).

These characteristics allow for many and densely spaced holes in each spinneret die, as shown in **Fig. 2****.** State-of-the-art spinneret dies (16 mm in diameter) may have 1800 to 2400 holes each with a diameter of about 60 µm. The exit speed of the spin dope jets may typically be in the range of 30-50 m/min (average speed in the holes). The production rate from a spinning head shown in **Fig. 1** (200 mm in diameter with 45 dies each having 2000 holes) may be in the range of 30 to 50 kg/h (1.3 dtex fibers).

However, compared to the viscose process using an acidic coagulation bath, the coagulation processes using an alkaline coagulation bath, comprising a coagulation salt (e.g. Na₂SO₄ or Na₂CO₃), differs from the acidic one. Especially, it has been found that the precipitated filaments remain swollen in the alkaline coagulation bath, the initial filaments thus having less structural integrity. These properties of the filaments limit the production rates, using conventional spinning heads and spinneret dies. In order to avoid filament breaks, resulting in formation of filament lumps/coils, the exit speed has to be significantly decreased lowering the production rate.

Thus, there is a need in the art for an efficient process for spinning cellulose dissolved in aqueous sodium hydroxide (NaOH) into cellulose fibers.

### Summary of the invention

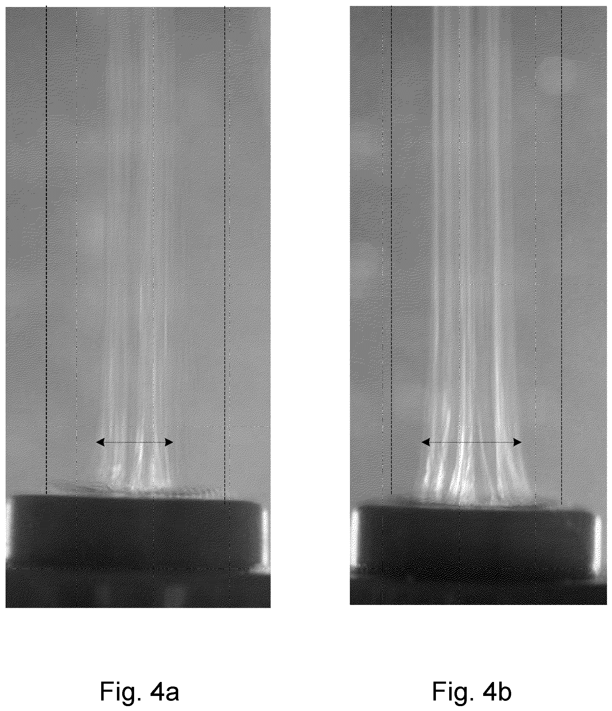

In studying spinning with conventional round spinneret dies with holes arranged in concentric circles, it was found that the softer nature of the swollen filament in case of alkali coagulation bath and the larger diameter, results in a radially inward movement pattern of the spin dope jets exiting the holes in the spinneret dies resulting in a tow contraction (cf. **Fig. 4a****).** A corresponding tow contraction is not seen if an acidic coagulation bath is used in which case the spin dope jets in principle follows a straight path upwards. In an acidic coagulation bath, the dense, thin, and strong filaments formed at the surface of the spinneret die resists the dragging action of the radial inward flow of coagulation bath liquid.

The tow contraction in case of an alkali coagulation bath is thus a consequence of the soft character of the jets and their significantly larger diameter producing a larger hydrodynamic interaction with the radial inflow of coagulation liquid. The described phenomena (radial inflow of coagulation liquid and tow contraction) tends to tear apart and break the forming filaments. The degree of coagulation is also sensitive to a high ratio of fiber volume to coagulation bath liquid volume in the upwards traveling tow. The tow contraction in case of an alkali coagulation bath will increase with increasing spin dope flow rate if maintaining the draft ratio constant (draft ratio, DR = take up speed divided by dope jet exit speed). It was thus concluded that both hole density for a conventional spinneret die and the exit speed limits the possible production rate using conventional viscose spinneret technology in case of an alkali coagulation bath.

Accordingly, there is according to a first aspect provided a process for spinning an alkaline cellulose spin dope, comprising dissolved cellulose, into an aqueous alkaline coagulation bath liquid, comprising a coagulation salt, such as a sodium coagulation salt, whereby forming cellulose filaments. The process comprises the steps of:
- feeding the alkaline cellulose spin dope to a spinneret die with a plurality of holes;
- extruding the alkaline cellulose spin dope through the holes into the aqueous alkaline coagulation bath liquid, whereby forming cellulose filaments; and
- withdrawing the cellulose filaments from the aqueous alkaline coagulation bath liquid.

By providing a spinneret die with the plurality of holes, each having a diameter of 40 to 100 µm, arranged in at least one group such that the distance from the center of any given hole in the group to the closest point on the perimeter of the group does not exceed 3 mm, such as 2 mm, and such that the holes at the perimeter of the group is in direct contact with aqueous alkaline coagulation bath liquid, the tow contraction may be significantly decreased, thereby improving the possible production rate. Thus, the spinneret die has a plurality of holes arranged in at least one group such that the distance from the center of any given hole in the group to the closest point on the perimeter of the group does not exceed 3 mm, such as 2 mm. The perimeter of the group of holes is defined by the perimeters of outermost holes in the group. The average center-to-center distance of adjacent holes in a group may be 200 to 400 µm, such as 250 to 400 µm.

According to an embodiment, the perimeter is defined by fitting a polygon, such as a quadrilateral, to the group of holes. Preferably, the quadrilateral is a rectangle or a trapezium (one pair of opposite sides being parallel), e.g. an isosceles trapezium (one pair of opposite sides being parallel and the base angles being equal). According to an embodiment, the polygon fitted to the group of holes is a rectangle.

According to another embodiment, the perimeter is defined by tangential straight lines between the perimeter of adjacent outermost holes in the group.

Typically, the plurality of holes is arranged in an elongated group. An elongated group may be essentially rectangular. Further, an elongated group may be tapered, at least partly, along its longitudinal external, such as essentially taking the form of isosceles trapezium (one pair of opposite sides being parallel and the base angles being equal).

In an embodiment in which the plurality of holes is arranged in an elongated group, the width of the group (the measure perpendicular to the longitudinal extension, i.e. the length, at half the length of the group) may be in the range 0.5 to 6 mm, preferably in the range 1 to 4 mm. Further, the length:width ratio of an elongated group, e.g. an essentially rectangular group, may be at least 2, such as at least 3. For a rectangular group, the length is the longest dimension of the group and the width is the dimension of the group perpendicular to the length, e.g. at half the length of the group. For an elongated group not being rectangular, the width is defined as the dimension of the group perpendicular to the length (i.e. the longest dimension of the group) at half the length of the group.

For an elongated group being tapered, such as an elongated group essentially taking the form of isosceles trapezium, the width may be at least 0.5 mm in one end and no more than 6 mm, such as no more than 4 mm, in an opposite end. Further, the width of elongated group being tapered may decrease stepwise, i.e. the group could be seen as comprising two or more adjacent rectangles. An elongated group being tapered may also be a wedge like group being very thin at one end of its longitudinal extension. For such an elongated group, the width at the thin end may even correspond to the diameter of a single hole.

In the art, a number of circular spinneret dies are typically arranged in a spinning head to which alkaline cellulose spin dope is fed to be extruded through each spinneret die. According to an embodiment, at least two, such as at least five, spinneret dies are arranged in a spinning head. In an embodiment according to which circular spinneret dies are arranged in the spinning head, at least 5 such as at least 10 spinneret dies may be arranged in the spinning head.

According to an embodiment, the plurality of holes of the spinneret die, such as a circular spinneret die, are arranged in more than one group of holes. The groups of holes are arranged in manner such that flow channels for the aqueous alkaline coagulation bath liquid are present on the spinneret die in between adjacent groups. The flow channels are devoid of holes. By providing the spinneret die with flow channels, holes at the perimeter of the groups have direct access to the aqueous alkaline coagulation bath liquid, as the aqueous alkaline coagulation bath liquid may flow in the flow channels to feed alkaline coagulation bath liquid to holes not present along the perimeter of the spinneret die. The groups of holes are arranged in manner such that the smallest distance between the perimeter of two adjacent groups is at least 450 µm, such as at least 500 µm, or at least 1000 µm, i.e. the width of the flow channels being at least at least 450 µm. According to an embodiment, groups of holes are arranged in such a manner that the distance between the perimeter of two adjacent groups is at least 1.5 times the smallest hole center-to-center distance between holes within the group, such as at least 3 times the smallest hole center-to-center distance between holes within the group

According to an embodiment, a spinneret die with more than one group of holes may be circular. The groups of holes on a circular spinneret die may be elongated, such as essentially rectangular. Further, elongated groups of holes may be tapered, at least partly, along their longitudinal extension. Elongated groups of holes arranged on a circular spinneret die may be radially arranged to provide radially arranged flow channels in between the groups of holes. By radially arranging essentially rectangular groups of holes, flow channels, being tapered towards the center of the circular spinneret die if the groups are essentially rectangular, may be provided radially on the circular spinneret die. Further, elongated groups of holes arranged on a circular spinneret die may differ in length to increase the number of groups on the spinneret die, while still maintaining a certain distance between adjacent groups.

According to an embodiment, adjacent elongated groups radially arranged on a circular spinneret die may have different length. Thus, a longer group of holes may be arranged next to a shorter group of holes. By arranging groups of different length on circular spinneret die, the number of holes present on the circular spinneret die may be increased while still providing flow channels with sufficient width to allow for an inward flow of aqueous alkaline coagulation bath liquid over the circular spinneret die. According to such an embodiment, the ratio length:width of a first shorter group may be at least 2, and the ratio length:width of a second longer group may be at least 3. The width of the groups may be in the range 0.5 to 6 mm; preferably the width of the groups being in the range 1 to 4 mm

According to an embodiment, elongated groups radially arranged on a circular spinneret die may at least partly be tapered along their longitudinal extension towards the center of the circular spinneret die. Preferably, at least the part of the elongated group facing the center of the circular spinneret die is tapered, such as at least 15% of the elongated group being tapered along its longitudinal extension. Elongated groups radially arranged on a circular spinneret die being at least partly tapered along their longitudinal extension towards the center of the circular spinneret die has the advantage that the distance between adjacent groups not decreases in the radial direction.

According to an embodiment, wherein elongated groups are radially arranged on a circular spinneret die, the radially arranged groups may be arranged in a fan shaped pattern to provide, apart from the flow channels, a major flow channel through which aqueous alkaline coagulation bath liquid may flow over the circular spinneret die to the center of the circular spinneret die. A major flow channel may serve to increases the feeding of aqueous alkaline coagulation bath liquid to holes in the center of the spinneret die.

According to an embodiment, wherein elongated groups are radially arranged on a circular spinneret die, no holes are arranged in the center of the circular spinneret die, whereby radial flow channels in between the elongated groups are in flow communication with each other in the center of the circular spinneret die.

According to another embodiment, wherein elongated groups are radially arranged on a circular spinneret die, holes are arranged also in the center of the circular spinneret die, whereby the flow channels in between the elongated groups are dead ended and not in flow communication with each other in the center of the circular spinneret die. The elongated groups could thus be seen as being arranged in a star shape or asterisk pattern.

The holes in a group may be distributed in different manners. According to an embodiment, they are homogenously distributed in the group, e.g. hexagonally or in a square pattern. Distributing the holes in a square pattern may improve the flow of aqueous alkaline coagulation bath liquid within the group.

Further, the holes may also be heterogeneously distributed in the group. Distributing the holes heterogeneously may improve the flow of aqueous alkaline coagulation bath liquid within the group. The average center-to-center distance of two adjacent holes in a group may be 250 to 400 µm also with heterogeneously distributed holes.

According to an embodiment, holes in a group on a circular spinneret die is heterogeneously arranged in a manner such that the average center-to-center hole distance is larger in radial direction than the average center-to-center hole distance in a direction perpendicular to the radial direction. Holes in a group arranged heterogeneously on a circular spinneret die may be arranged to provide micro channels for coagulation-liquid inflow into the group.

According to a further aspect, there is provided an alkaline cellulose spin dope spinneret die for spinning alkaline cellulose spin dope into an aqueous alkaline coagulation bath liquid. The spinneret die has a plurality of holes, the diameter of each hole being 40 to 100 µm. The holes are arranged in at least two groups. The holes in each group are arranged such that the distance from the center of any given hole in the group to the closest point on the perimeter of the group does not exceed 3 mm, such as 2 mm. Further, the holes in each group are arranged such that flow channel(s) for the aqueous alkaline coagulation bath liquid are arranged on the spinneret die in between adjacent groups. The flow channel(s) are devoid of holes. Preferably, the alkaline cellulose spin dope spinneret die is circular with radially arranged groups of holes and radially arranged flow channel(s) in between them. Further, preferred features of such a circular spinneret die have already been described herein above.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

### Brief description of the drawings

These and other aspects, features and advantages of which the invention is capable of will be apparent and elucidated from the following description of embodiments of the present invention, reference being made to the accompanying drawings, in which:
**Fig. 1** shows a photograph of a conventional spinning head known in the art with several round spinneret dies;
**Fig. 2** shows one of the spinneret dies in the spinning head in **Fig. 1****.** The holes in the conventional spinneret die are arranged in concentric circles;
**Fig. 3a** shows a round spinneret die according to an embodiment with the holes arranged in elongated groups;
**Fig. 3b** shows a round spinneret die according to an embodiment with the holes arranged in elongated groups;
**Fig. 4a** shows a photograph of spinning from a conventional spinneret die (cf. **Fig. 2****);**
**Fig. 4b** shows a photograph of spinning from a spinneret die according to an embodiment;
**Fig. 5** shows a round spinneret die according to an embodiment with the holes arranged in elongated groups and a close up of two adjacent groups of holes;
**Fig. 6** shows dies according to embodiments with groups of holes arranged radially;
**Fig. 7** shows various ways of distributing the holes in a given group of holes;
**Fig. 8** shows a rectangular spinneret die according to an embodiment;
**Fig. 9** shows a rectangular spinneret die according to an embodiment;
**Fig. 10** shows a spinneret heads with two rectangular spinneret dies, each with a group of holes, according to an embodiment; and
**Fig. 11** shows a photograph of a spinning head with four rectangular spinneret dies, each with a group of holes, according to an embodiment.

### Detailed description

In order to provide for efficient spinning of alkaline cellulose spin dope, a number of spinneret dies 110 (cf. **Fig 2****)** with holes 120 are typically assembled into a spinning head 100 as can be seen in **Fig. 1** and as known in the art. Alkaline cellulose spin dope is fed to the spinning head 100 and the alkaline cellulose spin dope is extruded through the holes 120 into the coagulation bath liquid to form cellulose filaments. The spinneret dies are provided with many holes 120 to provide for efficient spinning. In spinneret dies 110 in the art, the holes 120 are typically arranged in concentric circles, as can be seen in **Fig. 2****.**

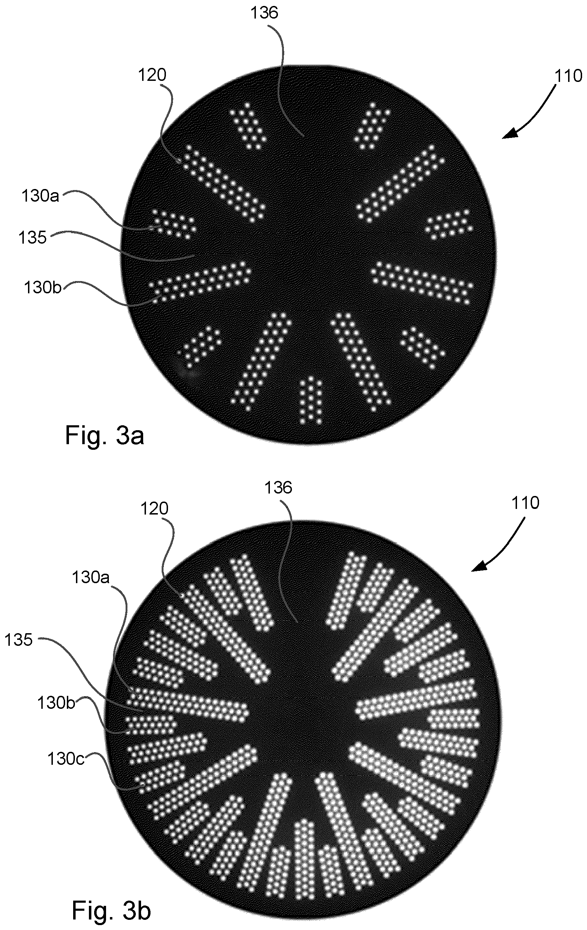

**Fig. 3a** and **3b****,** respectively, show a circular spinneret die 110 according to an embodiment. The holes 120 on the spinneret die 110 are arranged in elongated groups 130a, 130b to provide flow channels 135 for an inward flow of alkaline coagulation bath liquid in between the groups 130a, 130b, as shown in **Fig. 3a****.** The groups 130a, 130b are elongated. Further, the length of the groups 130a, 130b may differ. The groups may be radially arranged as shown in **Fig. 3****.** Optionally, one or more groups in a radial pattern may be left out to provide a major flow channel 136.

As can be seen in **Fig. 3b****,** groups 130a, 130b, 130c of different length may be combined to increase the number of holes 120 present on a spinneret die 110, while still providing flow channels 135 separating the groups 130.

As can be seen in **Fig. 4** (cf. double headed arrows), less tow contraction is seen when spinning with a spinneret die with the holes arranged in radially arranged groups (cf. **Fig. 4b****)** compared to a conventional spinneret die with the holes arranged in concentric circles (cf. **Fig. 4a****).** This means that the filaments are subject to less forces perpendicular to the flow direction.

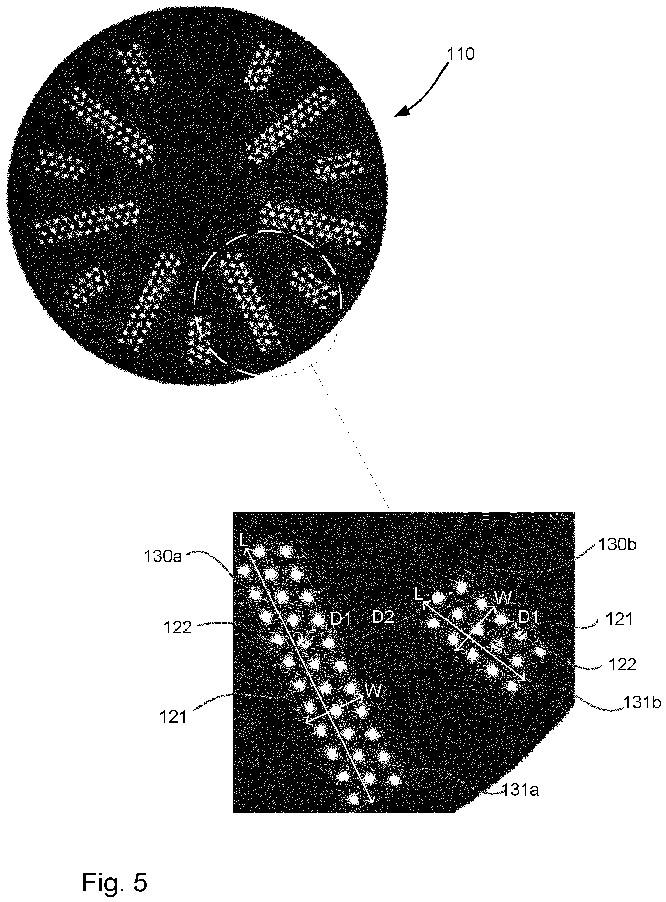

The elongated groups 130a, 130b, 130c in **Fig. 3** are essentially rectangular. By fitting a rectangle around the holes 120, the perimeter 131 of the group may be defined, as can be seen in **Fig. 5****.** The length L and width W of an elongated group may be defined as the length L and width W of a rectangle fitted to the group of holes. In fitting a rectangle to the holes 120, all holes are to be within the rectangle. Further, the rectangle is to be as short and as narrow as possible. The perimeter 121 is thus defined by the perimeter of the outermost holes 121 in the group 130.

The closest distance between two adjacent groups 130a, 130b may be defined as the closest distance D2 between the perimeter 131a, 131b of each of the groups 130a 130b. As an alternative to fitting a rectangle to the group, the perimeter may be defined by a tangential straight line between the perimeter of adjacent outermost holes 121 in the group 130. For the groups in **Fig. 5****,** this provides an arrow-shaped group 130a, 130b, being essentially rectangular. Further, also the distance D1 from the center of a hole 122 in the center of the group 130 to the closest point on the perimeter 131 of the group 130 is shown in **Fig. 5****.**

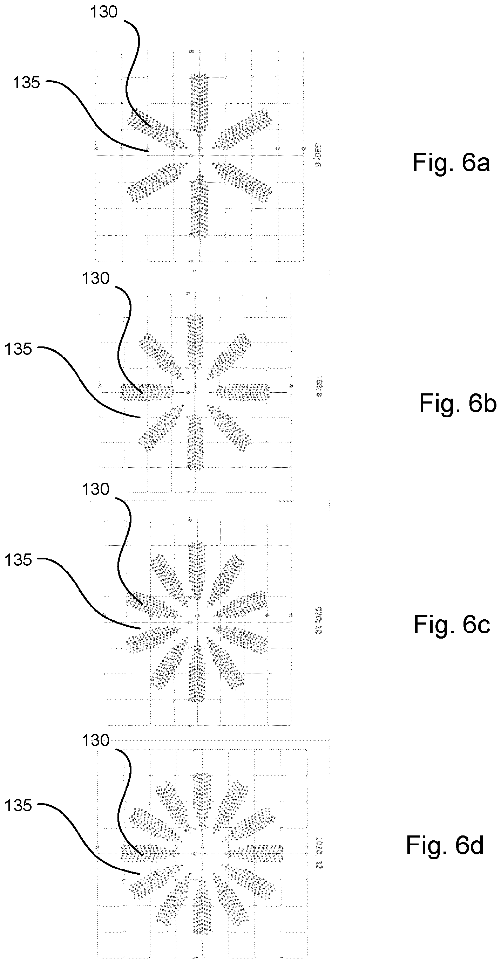

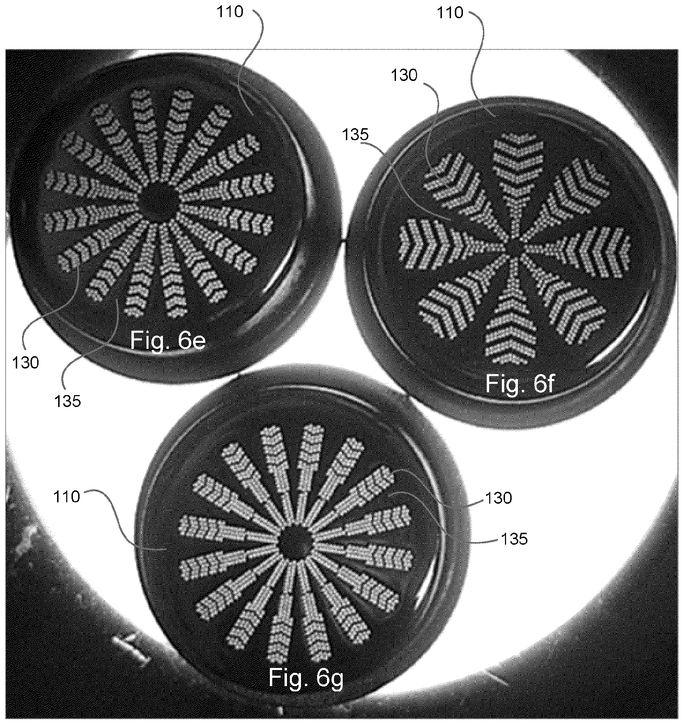

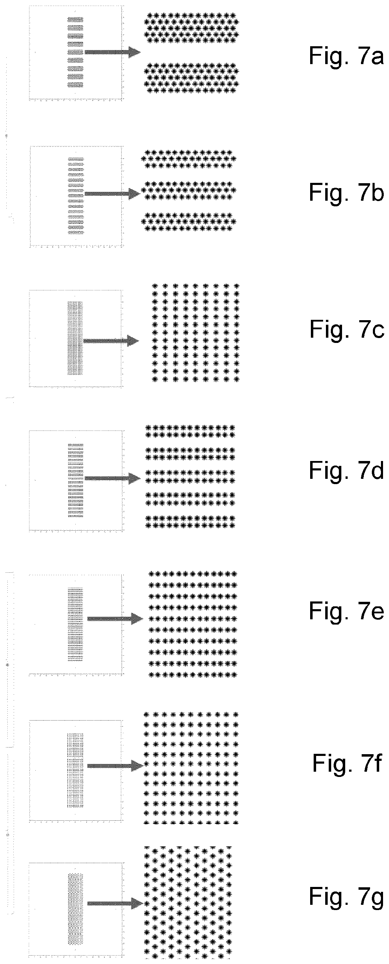

In arranging groups 130 of holes 120 radially, they may be arranged in a different number of radii (e.g. 6, 8, 10, 12, or 16) as can be seen in **Fig. 6a****-g.** The groups 130 are of same length with a tapered end pointing at the center of the circular spinneret die 110. No holes are arranged in the center of the circular spinneret die 110. By tapering the groups 130 the number of holes 120 present on a spinneret die 110 may be increased, while still providing flow channels 135 with sufficient width separating the groups 130.Further, as can be seen in **Fig. 6e****-g** and **Fig. 7****,** the holes 120 in a given group may be differently distributed, regardless the shape of the spinneret die 110.

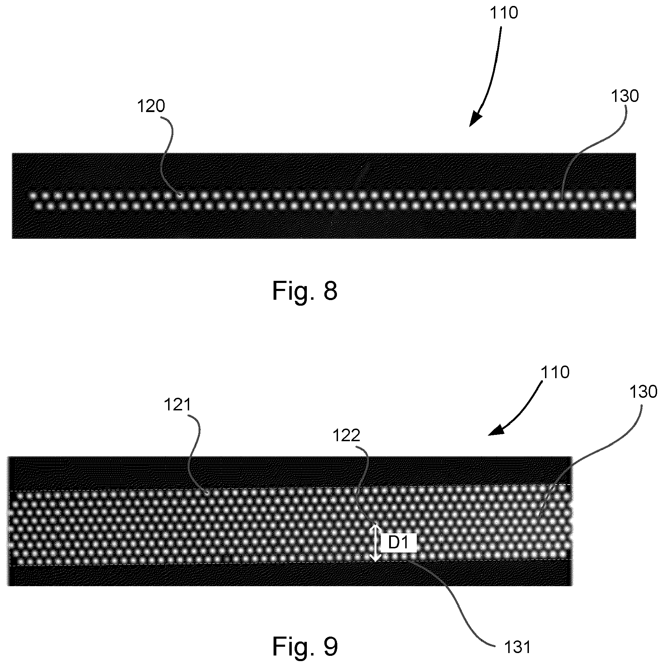

In **Fig. 8** a rectangular spinneret die 110 according to an embodiment is shown. One group 130 of holes 120 is present on the spinneret die 110. According to this embodiment, the group 120 consists of two line of holes 130.In **Fig. 7** a rectangular spinneret die 110 according to an embodiment is shown. This embodiment is similar to the one in **Fig. 9****.** The group 120 of holes 130 however consists of nine line of holes 130.

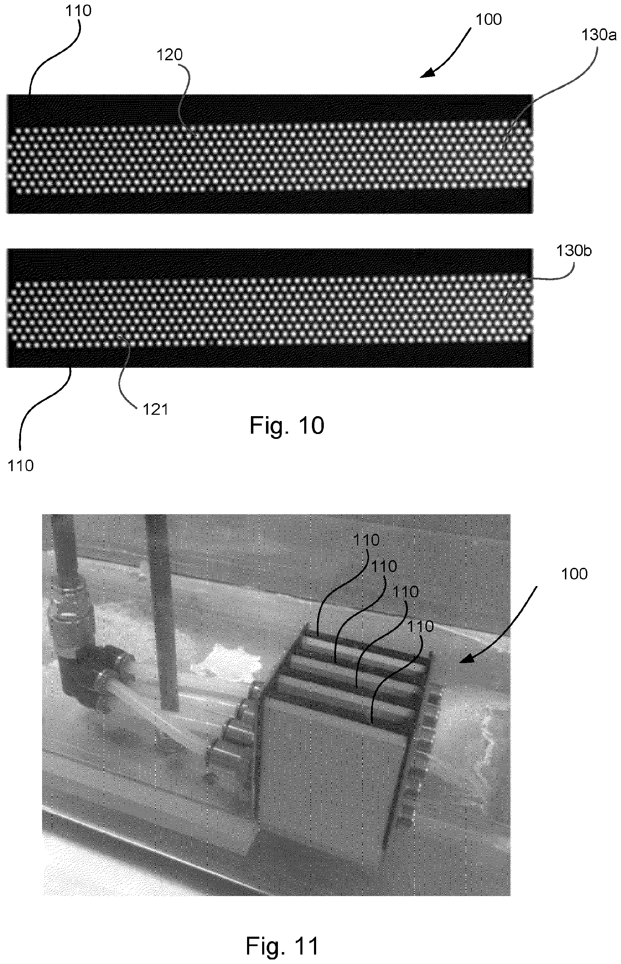

Similar to circular spinneret dies 110, also rectangular spinneret dies 110 may be arranged together in a spinning head 100 as schematically shown in **Fig. 10****,** showing rectangular spinneret dies 110 from above. **Fig. 11** shows a photograph of a spinning head 100 with four rectangular spinneret dies 110 arranged in parallel spaced apart.

### Examples

### Example 1 spinneret head two lines of holes

A spinneret die with a rectangular group of holes (∅ 60 µm) arranged in two parallel lines were used (cf. **Fig. 8****).** The distance between the perimeters of two adjacent holes in a line was 140 µm (200 µm between hole centers).

This spinneret die was used to spin a spin dope comprising 6.0 wt-% acid hydrolyzed birch pulp (intrinsic viscosity =210), 7.5 wt-% NaOH and 0.95 wt-% ZnO. In preparing the spin dope, it was filtered in a filter press through two PP non-woven filter media in series (coarse and fine).

The aqueous alkaline coagulation bath liquid used comprised 21 wt-%Na₂CO₃ and 5.7 wt-% NaOH. Its temperature was 29 °C. In spinning, in-line filtering by means of SIKA-FIL 20µm metal fiber fleece was used. The spin bath depth was 80 cm. Spinning with exit speed 40 m/min and godet speed (take-up speed) of 35 m/min worked well (draft ratio = 0.88).

### Example 2 - spinneret head two lines of holes

The same spinneret die as in example 1 was used. The spin dope comprised 6.0 wt-% cellulose, 7.5 % NaOH, and 0.9 % ZnO. The aqueous alkaline coagulation bath liquid used comprised 21 wt-% Na₂CO₃ and 5 wt-% NaOH. Its temperature was 30°C.

The following results were obtained by spinning in the same manner as in example 1.

**Table 1 - Spinneret head two lines of holes**

| **Exit speed, m/min** | **Take-up speed** | **Comment** |
|---|---|---|
| 37 | 37 | No loose fibers or lumps |
| 50 | 40 | Thread line break; no lumps |

### Example 3 (reference example) conventional spinneret cap

A conventional spinneret cap was used (cf. **Fig. 2****).** The spin dope comprised 6.3 wt-% cellulose (IV=220 ml/g) dissolved in cold alkali. The aqueous alkaline coagulation bath liquid used comprised 5.0 wt-% NaOH and about 20 wt-% Na₂CO₃. Its temperature was 30°C.

The following results were obtained by spinning in the same manner as in example 1.

**Table 2 - Spinneret head two lines of holes**

| **Exit speed at spinneret surface (V0, m/min)** | **Maximum possible take up speed (VI, m/min) without lump formation** | **Draft ratio, V1/V0** | **Spinneret cap (conventional)** |
|---|---|---|---|
| 15 | 13 | 0.87 | Circular, 300 holes (∅55 µm) |
| 20 | 15 | 0.75 | Circular, 300 holes (∅ 55 µm) |
| 25 | 16 | 0.64 | Circular, 300 holes (∅55 µm) |
| 15 | 8 | 0.53 | Circular, 900 holes (∅60 µm) |

In example 3, it is shown that the draft ratio must be significantly decreased when the exit speed is increased for conventional spinneret caps to avoid filament breaks and formation of coils entrained by the tow. Lowering exit speed, results in lowered production rate. It was further shown that this effect (i.e. filament breaks and formation of coils entrained by the tow) is stronger when the hole density is increased (900 vs. 300 on the same spinneret cap surface area).

However, if a row type spinneret die is used (cf. example 1 and 2) the problem of lump formation is overcome and exit speeds up to 40-50 m/min can be used with draft ratios in the range 0.8 to 0.9. Low draft ratios are less preferred since the linear density target (1.3-1.5 dtex) cannot be reached with normal spinneret hole diameters (productivity decrease with decreasing hole diameter). There is also a practical lower limit to the hole diameter that can economically be manufactured, at around 40 microns.

### Example 4 - spinneret die with nine lines of holes arranged in a rectangular group compared to a conventional spinneret die

A spinneret die with nine lines of holes (541 holes in total) is compared to a conventional spinneret die. The spinneret die had a rectangular group of holes (∅ 60 µm) arranged in 9 parallel lines in a hexagonal pattern (cf. **Fig. 9****).** The distance between the perimeters of two adjacent holes in a line was 140 µm (200 µm between hole centers). The conventional circular spinneret die (cf. Fig. 2) had 400 holes (**∅** 60µm) arranged such that the distance between perimeters of two adjacent holes was about 540 µm (600 µm between hole centers).

The spin dope comprised 6.0 wt-% cellulose (IV=210 ml/g) dissolved in cold alkali. The aqueous alkaline coagulation bath liquid used comprised 20 wt-% Na₂CO₃ and 5.6 wt-% NaOH. Its temperature was 28°C. The spin bath depth was 400 mm.

Spinning was started at a low extrusion speed (exit speed) and was gradually increased to find the maximum possible exit speed producing stable spinning without lump formation. The draft ratio (take up speed/exit speed) was kept constant at 1.0 during the experiment.

The rectangular spinneret die allowed for significantly higher exit speeds (26 to 30 m/min compared to 10 m/min for the conventional circular spinneret cap), even though the holes were more densely (distance between perimeters of two adjacent holes 140 µm vs. 540 µm) arranged. The number of parallel lines could be increased from two (cf. example 1 and 2) to at least nine, maintaining a high exit speed (=high production rate). The distance from the center of a hole in the central line of holes to the closest point on the perimeter of the rectangular group formed by the nine lines was 0.83 mm.

### Example 5 - spinneret die with radially arranged groups of holes compared to a conventional circular spinneret die

Spinneret dies with radially arranged groups (each comprising three lines of holes with a dimeter of 60 µm) holes were compared to the conventional circular spinneret used in example 5. The first spinneret die (cf. **Fig 3a****)** with radially arranged groups comprised 303 holes (the distance between the perimeters of two adjacent holes being 340 µm; 400 µm between hole centers), whereas the second (cf. **Fig 3b****)** comprised 1041 holes (the distance between the perimeters of two adjacent holes being 190 µm; 250 µm between hole centers).

The spin dope comprised 6.0 wt-% cellulose (IV=210 ml/g) dissolved in cold alkali. The aqueous alkaline coagulation bath liquid used comprised 20 wt-% Na₂CO₃ and 5.6 wt-% NaOH. Its temperature was 28°C. The spin bath depth was 400 mm.

Spinning was started at a low extrusion speed (exit speed) and was gradually increased to find the maximum possible exit speed producing stable spinning without lump formation. The draft ratio (take up speed/exit speed) was kept constant at 1.0 during the experiment.

The spinneret die with radially arranged groups of holes allowed for significantly higher exit speeds (22 and 20 m/min, respectively, compared to 10 m/min), even though the holes were more densely arranged. Actually, the number of holes could be increased from 303 to 1041 without significantly affecting the maximum exit speed.

The maximum exit speed (at a draft ratio of 1.0) for the spinneret die with radially arranged groups of holes comprising 1041 holes was significantly higher than the one for the spinneret cap with 900 evenly distributed holes (cf. examples 3 and 4;), emphasizing the importance of the arrangement of the holes.

### Example 6 - Spinneret die with radially arranged tapered groups of holes

A spindope of 6 wt% cellulose pulp with an IV of 210 ml/g in 7.5 wt% NaOH and 0.95 wt% ZnO was filtered at 20°C through a 20µ non-woven filter and then spun into a coagulation liquid containing water, 18wt% Na₂CO₃, 5.5 wt% NaOH, and 0.7 wt% ZnO, at 30°C.

The ratio between extrusion speed (mean dope velocity through the spinneret capillaries) and the take-up speed (velocity by which the filaments formed are removed from the coagulation liquid), often termed draft, was 1.6. This implies a positive degree of stretch between die and take-up godet of 60%. The use of positive draft is an efficient way to differentiate between spinnerets which suffer from tow contraction and ruptured filaments at higher spinning speeds. However, a draft of 1.6 is generally not used for large scale production as the process then becomes less stable and more demanding. Under these conditions it is not possible to spin at all with a traditional spinneret with 300 holes evenly spaced over a circular area with 12 mm diameter (cf. **Fig. 2****).** The maximum speed allowing stable and satisfactory extrusion (negligible numbers of broken filaments) was evaluated for the new spinnerets that were designed based to larger or lesser degree on the invention.

Also, the tenacity of the wet tow was measured, in-line, by the use of a deflection roller connected to a newton meter, when spinning at 10 m/min and a regular draft of 1, i.e. no die-to-take-up-godet stretch. This is a good indication of the degree of coagulation achieved.

Different spinnerets with hole distributions illustrated in **Fig. 6** and **7** were tested. All have holes of diameter 60µ.

*Example 6A)* A rectangular field 12 * 1.45 mm, comprising 9 parallel lines of holes (541 in total) being organized in a hexagonal pattern so that all neighboring holes were equidistanced at 200 µm, center-to-center, allowed spinning at 14 m/min with draft 1.6, but poor coagulation with max stress of <0.3 cN/tex (calculated on dry cellulose content).

*Example 6B)* A rectangular field 12 * 3.5 mm, comprising 9 parallel lines of holes (217 in total) being organized in a hexagonal pattern so that all neighboring holes were equidistanced at 500 µm, center-to-center, allowed spinning at only 5 m/min with draft 1.6, but very good coagulation with max stress of >1.3 cN/tex (calculated on dry cellulose content).

*Example 6C)* A rectangular field 12.5 * 2.4mm, comprising 11 parallel lines of holes (500 in total) being organized in a hexagonal pattern (cf. **Fig. 7g****)** so that all neighboring holes were equidistanced at 270 µm, center-to-center, allowed spinning at only 5 m/min with draft 1.6. However, the max stress was somewhat improved to 0.5 cN/tex (calculated on dry cellulose content).

This shows how larger hole-to-hole distances increases the coagulation but reduces the allowable extrusion speed. More coagulation liquid is pulled into the proximity of filaments, and improves coagulation, but the larger flow also increases the stresses on the outermost filaments through which the coagulation liquid must pass to reach the interior filaments. Even if an increased hole-to-hole distance would facilitate inflow, it does not compensate for the larger flow required to fill the larger volumes between the more distanced holes/filaments.

*Example 6D)* A rectangular field 12 * 2.6 mm, comprising 11 parallel lines of holes (506 in total) being organized in a square pattern (cf. **Fig. 7f****)** so that the neighboring holes were equidistanced at 260 µm, center-to-center, allowed spinning at 6 m/min with draft 1.6. The max stress was somewhat improved to 0.65 cN/tex (calculated on dry cellulose content).

The density is similar to the hexagonal case in *Example 6C)* but both evaluation measures are improved showing that a square pattern is preferable to a hexagonal. A square distribution offers less inertial drag force between liquid and filaments as the liquid flow within the group is improved.

*Example 6E)* A rectangular field 12 * 2.5 mm, comprising 13 parallel lines of holes (520 in total) being organized in a periodic rectangular pattern (cf. **Fig. 7d****)** so that the neighboring holes were distanced by 200 µm, center-to-center, between lines (in the width direction of the rectangle) and by 200 or 400 µm periodically in the length direction, allowed spinning at 14 m/min with draft 1.6. The max stress was almost 0.8 cN/tex (calculated on dry cellulose content).

Clearly, there is a benefit in distributing the holes in concentrated fashion on an even smaller length scale than the dimensions of the larger rectangular group, to improve the liquid flow within the group, through microchannels perpendicular to the perimeter of the group.

*Example 6F)* Distribution as in **Fig. 6a****,** with center-to-center hole distances of 300µ radially and 200 µm tangentially within the elongated groups (6 in total), comprised 630 holes. It allowed spinning at 10 m/min with draft 1.6. The max stress was almost 1 cN/tex (calculated on dry cellulose content).

*Example 6G)* Distribution as in **Fig. 6c****,** with center-to-center hole distances of 300µ radially and 200 µm tangentially within the elongated groups (10 in total), comprised 920 holes. It allowed spinning at 10 m/min with draft 1.6. The max stress was 0.65 cN/tex (calculated on dry cellulose content).

*Example 6H)* Distribution as in **Fig. 6d****,** with center-to-center hole distances of 300 µm radially and 200 µm tangentially within the elongated groups (12 in total), comprised 1020 holes. However, it allowed spinning at just 3 m/min with draft 1.6. The max stress was 0.4 cN/tex (calculated on dry cellulose content).

The examples 6F-H show that there is a lower limit to the width of channels, given a certain size of the groups to which coagulation liquid is supplied through those channels, at which the degree of coagulation and spinning stability is affected negatively by further reducing the channel width. The lower limit to the width of channels is about 450 µm. As already stated herein, the width of channels is preferably at least 1000 µm.

## Claims

1. A process for spinning an alkaline cellulose spin dope, comprising dissolved cellulose, into an aqueous alkaline coagulation bath liquid, comprising a coagulation salt, whereby forming cellulose filaments, the process comprising the steps of:
- feeding the alkaline cellulose spin dope to a spinneret die (110) with a plurality of holes (120) arranged in at least one group (130) such that the distance (D1) from the center of any given hole (120) in the group (130) to the closest point on the perimeter (131) of the group (130) does not exceed 3 mm, such as 2 mm, the diameter of each hole (120) being 40 to 100 µm;
- extruding the alkaline cellulose spin dope through the holes (120) into the aqueous alkaline coagulation bath liquid, whereby forming cellulose filaments; and
- withdrawing the cellulose filaments from the aqueous alkaline coagulation bath liquid;
wherein holes (121) at the perimeter (131) of the group (130) is in direct contact with aqueous alkaline coagulation bath liquid.

2. The process according to claim 1, wherein the group (130) is elongated; preferably the elongated group (130) being essentially rectangular or tapered.

3. The process according to claim 2, wherein the width (W) of the group (130) is in the range 0.5 to 6 mm, preferably the width (W) of the group (130) being in the range 1 to 4 mm, the width being the dimension of the group perpendicular to the length at half the length of the group; and/or wherein the length (L):width (W) ratio of the group (130) is at least 2, such as at least 3.

4. The process according to any one of claims 1 to 3, wherein the plurality of holes (120) are arranged in more than one group (130), and wherein flow channel(s) (135) for aqueous alkaline coagulation bath liquid are arranged on the spinneret die (110) in between adjacent groups (130), the flow channel(s) (135) being devoid of holes, thereby providing holes (121) at the perimeter (131) of the groups (130) with direct access to the aqueous alkaline coagulation bath liquid; preferably the spinneret die (110) being circular; preferably the width of the flow channels being at least at least 450 µm.

5. The process according to claim 4, wherein the plurality of holes (120) are arranged in elongated groups (130), and wherein the spinneret die (110) is circular; preferably the elongated groups (130) being radially arranged.

6. The process according to claim 5, wherein the elongated groups (130) are essentially rectangular and/or tapered.

7. The process according to claim 6, wherein the elongated groups (130) are essentially rectangular groups, the elongated groups (130) being radially arranged on the circular spinneret die (110), and wherein adjacent elongated groups preferably have different length.

8. The process according to claim 6, wherein the elongated groups (130) are radially arranged on the circular spinneret die (110), and wherein the elongated groups (130) are at least partly tapered along their longitudinal extension towards the center of the circular spinneret die (110).

9. The process according to any one of claims 1 to 9, wherein the holes (120) are heterogeneously distributed within the group (130).

10. The process according to any one of claims 5 to 9, wherein at least two, such as at least five, circular spinneret dies (110) are arranged in a spinning head (100) to which alkaline cellulose spin dope is fed to be extruded through each spinneret die

11. An alkaline cellulose spin dope spinneret die (110) for spinning alkaline cellulose spin dope into an aqueous alkaline coagulation bath liquid, the spinneret die (110) having a plurality of holes (120), the diameter of each hole (120) being 40 to 100 µm, wherein the holes (120) are arranged in at least two groups (130), the holes in each group being arranged such that the distance (D1) from the center of any given hole (120) in the group (130) to the closest point on the perimeter (131) of the group (130) does not exceed 3 mm, such as 2 mm, and wherein flow channel(s) (135) for aqueous alkaline coagulation bath liquid are arranged on the spinneret die (110) in between adjacent groups (130), the flow channel(s) (135) being devoid of holes.

12. The alkaline cellulose spin dope spinneret die (110) according to claim 11, wherein the plurality of holes (120) are arranged in elongated groups (130), and wherein the spinneret die (110) is circular; preferably the elongated groups (130) being radially arranged.

13. The alkaline cellulose spin dope spinneret die (110) according to claim 12, wherein the elongated groups (130) are essentially rectangular and/or tapered.

14. The alkaline cellulose spin dope spinneret die (110) according to claim 13, wherein:
- the elongated groups (130) are essentially rectangular groups, the elongated groups (130) being radially arranged on the circular spinneret die (110), and wherein adjacent elongated groups preferably have different length; and/or
- the elongated groups (130) are radially arranged on the circular spinneret die (110), and wherein the elongated groups (130) are at least partly tapered along their longitudinal extension towards the center of the circular spinneret.

15. The alkaline cellulose spin dope spinneret die (110) according to any one of claims 11 to 14, wherein the holes (120) are heterogeneously distributed in the group (130).
